# EUROPEAN PATENT APPLICATION

(11) **EP 4 408 088 A1**
(43) Date of publication of application: **31.07.2024**
(21) Application number: 22871887.0
(22) Date of filing: 16.09.2022
(51) Int. Cl.: H04W 64/00

(54) **COMMUNICATION SENSING METHOD AND APPARATUS AND COMMUNICATION DEVICE**

(30) Priority: 22.09.2021 CN 202111108724
(71) Applicant: VIVO MOBILE COMMUNICATION CO., LTD., Dongguan, Guangdong 523863 (CN)
(72) Inventor: YAO, Jian, Dongguan, Guangdong 523863 (CN); PAN, Xiang, Dongguan, Guangdong 523863 (CN); SI, Ye, Dongguan, Guangdong 523863 (CN); YUAN, Yannan, Dongguan, Guangdong 523863 (CN); JIANG, Dajie, Dongguan, Guangdong 523863 (CN)
(74) Representative: Lavoix
(86) International application number: PCT/CN2022/119277
(87) International publication number: WO 2023/045841

(57) **Abstract**

This application provides a sensing positioning method and apparatus, and a communication device, and belongs to the field of communication technologies. The method in embodiments of this application includes: receiving, by a first communication device, a sensing requirement; and sending, by the first communication device in a case that the sensing requirement is a sensing requirement associated with a positioning service, the sensing requirement to a second communication device, and sending a positioning requirement to a third communication device.

## Description

### CROSS-REFERENCE TO RELATED APPLICATIONS

This application claims priority to Chinese Patent Application No. 202111108724.4 filed on September 22, 2021, which is incorporated herein by reference in its entirety.

### TECHNICAL FIELD

This application relates to the field of communication technologies, and in particular, to a sensing positioning method and apparatus, and a communication device.

### BACKGROUND

In addition to communication capabilities, future mobile communication systems also have sensing capabilities. For the sensing capabilities, it means that one or more devices with the sensing capabilities can sense an orientation, a distance, a speed, and other information of a target object through sending and receiving of wireless signals, or detect, track, identify, and image a target object, an event, or an environment, or the like. In the future, with the deployment of small base stations with high-frequency and large-bandwidth capabilities such as millimeter wave and terahertz in the 6^{th} Generation (6^{th} Generation, 6G) network, a sensing resolution is to be significantly improved compared to centimeter wave, allowing the 6G network to provide more sophisticated sensing services. However, in related technologies, there is no relevant solution on how to perform sensing based on positioning information.

### SUMMARY

Embodiments of this application provide a sensing positioning method and apparatus, and a communication device, to solve a problem of how to perform sensing based on positioning information.

According to a first aspect, a sensing positioning method is provided, including.
receiving, by a first communication device, a sensing requirement; and
sending, by the first communication device in a case that the sensing requirement is a sensing requirement associated with a positioning service, the sensing requirement to a second communication device, and sending a positioning requirement to a third communication device.

According to a second aspect, a sensing positioning method is provided, including.
obtaining, by a third communication device, a positioning requirement, where the positioning requirement is sent by a first communication device in a case that a sensing requirement received by the first communication device is a sensing requirement associated with a positioning service;
obtaining first information according to the positioning requirement, where the first information includes at least one of signal configuration information and a measurement quantity, the signal configuration information is signal configuration information used for sensing measurement and/or positioning measurement, and the measurement quantity is a measurement quantity used for sensing measurement and/or positioning measurement; and
sending the first information to at least one of a second communication device and a fourth communication device, where the second communication device includes a terminal and/or a base station associated with the sensing requirement, and the fourth communication device includes a terminal and/or a base station associated with the positioning requirement.

According to a third aspect, a sensing positioning apparatus is provided, including.
a first receiving module, configured to receive a sensing requirement; and
a first sending module, configured to send, in a case that the sensing requirement is a sensing requirement associated with a positioning service, the sensing requirement to a second communication device, and send a positioning requirement to a third communication device.

According to a fourth aspect, a sensing positioning apparatus is provided, including.
a first obtaining module, configured to obtain a positioning requirement, where the positioning requirement is sent by a first communication device in a case that a sensing requirement received by the first communication device is a sensing requirement associated with a positioning service;
a second obtaining module, configured to obtain first information according to the positioning requirement, where the first information includes at least one of signal configuration information and a measurement quantity, the signal configuration information is signal configuration information used for sensing measurement and/or positioning measurement, and the measurement quantity is a measurement quantity used for sensing measurement and/or positioning measurement; and
a second sending module, configured to send the first information to at least one of a second communication device and a fourth communication device, where the second communication device includes a terminal and/or a base station associated with the sensing requirement, and the fourth communication device includes a terminal and/or a base station associated with the positioning requirement.

According to a fifth aspect, a communication device is provided. The communication device includes a processor, a memory, and a program or instructions stored in the memory and runnable on the processor, the program or the instructions, when executed by the processor, implementing the steps of the method according to the first aspect or the second aspect.

According to a sixth aspect, a communication device is provided, including a processor and a communication interface. The communication interface is configured to receive a sensing requirement, and send, in a case that the sensing requirement is a sensing requirement associated with a positioning service, the sensing requirement to a second communication device, and send a positioning requirement to a third communication device. Alternatively, the communication interface is configured to obtain a positioning requirement, where the positioning requirement is sent by a first communication device in a case that a sensing requirement received by the first communication device is a sensing requirement associated with a positioning service. The processor is configured to obtain first information according to the positioning requirement, where the first information includes at least one of signal configuration information and a measurement quantity, the signal configuration information is signal configuration information used for sensing measurement and/or positioning measurement, and the measurement quantity is a measurement quantity used for sensing measurement and/or positioning measurement. The communication interface is configured to send the first information to at least one of a second communication device and a fourth communication device, where the second communication device includes a terminal and/or a base station associated with the sensing requirement, and the fourth communication device includes a terminal and/or a base station associated with the positioning requirement.

According to a seventh aspect, a readable storage medium is provided, storing a program or instructions, the program or the instructions, when executed by a processor, implementing the steps of the method according to the first aspect or the steps of the method according to the second aspect.

According to an eighth aspect, a chip is provided, where the chip includes a processor and a communication interface, the communication interface is coupled to the processor, and the processor is configured to run a program or instructions, to implement the method according to the first aspect, or implement the method according to the second aspect.

According to a ninth aspect, a computer program/program product is provided, where the computer program/program product is stored in a non-transitory storage medium, and the computer program/program product is executed by at least one processor to implement the steps of the method according to the first aspect or the second aspect.

According to a tenth aspect, a communication device is provided, configured to perform the method according to the first aspect or the second aspect.

In this embodiment of this application, the sensing requirement is received. In a case that the sensing requirement is a sensing requirement associated with the positioning service, the sensing requirement is sent to the second communication device, and the positioning requirement is sent to the third communication device, thereby triggering a process combining sensing and positioning, and achieving the purpose of performing sensing based on positioning information.

### BRIEF DESCRIPTION OF THE DRAWINGS

FIG. 1 is a schematic flowchart 1 of a sensing positioning method according to an embodiment of this application;
FIG. 2 is a schematic diagram of an architecture combining sensing and positioning according to an embodiment of this application;
FIG. 3 is a schematic diagram of interaction of a sensing positioning method according to an embodiment of this application;
FIG. 4 is a schematic flowchart 2 of a sensing positioning method according to an embodiment of this application;
FIG. 5 is a schematic diagram 1 of modules of a sensing positioning apparatus according to an embodiment of this application;
FIG. 6 is a schematic diagram 2 of modules of a sensing positioning apparatus according to an embodiment of this application;
FIG. 7 is a structural block diagram of a communication device according to an embodiment of this application;
FIG. 8 is a structural block diagram of a first communication device according to an embodiment of this application; and
FIG. 9 is a structural block diagram of a third communication device according to an embodiment of this application.

### DETAILED DESCRIPTION

The technical solutions in embodiments of this application are clearly described below with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

The specification and claims of this application, and terms "first" and "second" are used to distinguish similar objects, but are not used to describe a specific sequence or order. It should be understood that the terms used in this way are interchangeable in a proper case, so that embodiments of this application can be implemented in other orders than the orders illustrated or described herein. Moreover, the objects distinguished by "first" and "second" are usually of one type, and the quantity of objects is not limited. For example, there may be one or more first objects. In addition, "and/or" in the description and claims represents at least one of connected objects, and the character "I" generally indicates an "or" relationship between associated objects.

It should be noted that the technologies described in embodiments of this application are not limited to a long term evolution (Long Term Evolution, LTE)/LTE-advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies described above, and can also be applied to other systems and radio technologies. The following description describes a new radio (New Radio, NR) system for illustrative purposes, and NR terminology is used in most of the description below. These technologies are also applicable to applications other than NR system applications, for example, the 6^{th} generation (6^{th} Generation, 6G) communication system.

To enable a person skilled in the art to better understand embodiments of this application, the following description is provided first.

In addition to communication capabilities, future mobile communication systems, for example, a beyond 5G (Beyond 5G, B5G) system or a 6G system, also have sensing capabilities. For the sensing capabilities, it means that one or more devices with the sensing capabilities can sense an orientation, a distance, a speed, and other information of a target object through sending and receiving of wireless signals, or detect, track, identify, and image a target object, an event, or an environment, or the like. In the future, with the deployment of small base stations with high-frequency and large-bandwidth capabilities such as millimeter wave and terahertz in the 6G network, a sensing resolution is to be significantly improved compared to centimeter wave, allowing the 6G network to provide more sophisticated sensing services.

For some sensing applications, such as environment reconstruction, when a sensing signal measurement party is user equipment (User Equipment, UE, also referred to as a terminal), cooperation of a positioning function is required, that is, UE location information needs to be obtained. According to the UE location information and environment reflection point information obtained through measurement, an environment map is reconstructed. Alternatively, a base station senses and reconstructs a surrounding environment based on a spontaneous self-collection mode, and then uses the reconstruction information to assist UE positioning. For other sensing applications, such as indoor action recognition, breathing detection, and weather detection, as a sender or a receiver of a signal, the UE can determine, if the UE location information is obtained, a sensing signal configuration or a measurement quantity according to a location of a transceiver device and a location of a to-be-sensed target or a sensing area, or assist in calculating a sensing result, thereby obtaining higher sensing accuracy and providing better sensing services. However, in related technologies, there is no relevant solution on how to perform sensing based on positioning information.

The sensing positioning method provided in embodiments of this application is described in detail below with reference to the accompanying drawings by using some embodiments and application scenarios.

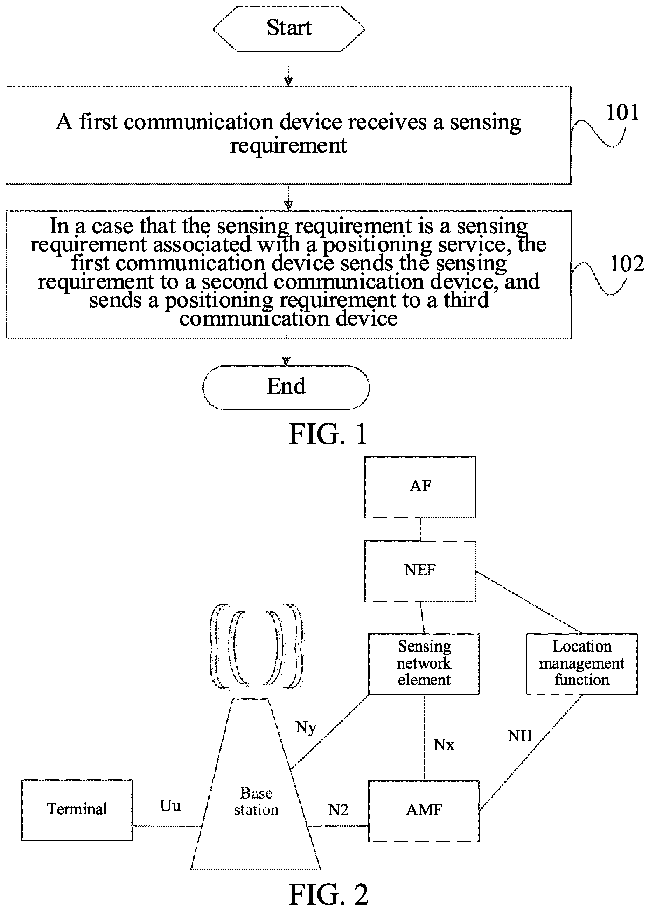

As shown in FIG. 1, an embodiment of this application provides a sensing positioning method, including:
Step 101: A first communication device receives a sensing requirement.

The first communication device may be specifically a sensing network function or a sensing network element.

In this step, the sensing requirement may be initiated by a third-party application or a core network (or a network management system or a base station) or a terminal.

For example, the third-party application sends the sensing requirement to an application server (including an in-network server, such as an IP multimedia subsystem (IP Multimedia Subsystem, IMS), or an off-network server). The application server sends the sensing requirement to the sensing network function/sensing network element. Alternatively, the application server sends the sensing requirement to an access and mobility management function (Access and Mobility Management Function, AMF), and the AMF selects at least one sensing network function/sensing network element and sends the requirement to the sensing network function/sensing network element.

For another example, the core network AMF selects at least one sensing network function/sensing network element and sends the sensing requirement to the sensing network function/sensing network element; or the AMF receives the sensing requirement sent by the network management system, and selects at least one sensing network function/sensing network element and forwards the requirement to the sensing network function/sensing network element; or the AMF receives the sensing requirement sent by the base station, and selects at least one sensing network function/sensing network element and forwards the requirement to the sensing network function/sensing network element;

For another example, the UE sends the sensing requirement to the core network AMF through non-access stratum (Non-Access Stratum, NAS) signaling. The AMF selects at least one sensing network function/sensing network element and sends the sensing requirement to the sensing network function/sensing network element.

The foregoing sensing requirement includes at least one of the following:
a sensing target/object;
a sensing area;
a sensing result/sensing quantity;
a sensing quality of service (Quality of Service, QoS); and
a sensing performance indicator.

The sensing performance indicator includes at least one of sensing accuracy/sensing error, a sensing resolution, a sensing range, a sensing delay, a detection probability, and a false alarm probability.

Step 102: The first communication device sends, in a case that the sensing requirement is a sensing requirement associated with a positioning service, the sensing requirement to a second communication device, and sends a positioning requirement to a third communication device.

After receiving the sensing requirement, the first communication device determines whether positioning service assistance is needed based on the sensing requirement. If the sensing requirement requires positioning service assistance, it is determined that the sensing requirement is a sensing requirement associated with the positioning service, a process combining sensing and positioning is triggered, the sensing requirement is sent to the second communication device, and the positioning requirement is sent to the third communication device.

The second communication device may be a first base station and/or a first terminal associated with the sensing requirement, and the third communication device may be a location management function (Location Management Function, LMF).

Specifically, sending the positioning requirement to the third communication device includes: sending the positioning requirement to the AMF, where the AMF selects at least one LMF, and sends the positioning requirement to the LMF.

According to the sensing positioning method in this embodiment of this application, the sensing requirement is received. In a case that the sensing requirement is a sensing requirement associated with the positioning service, the sensing requirement is sent to the second communication device, and the positioning requirement is sent to the third communication device, thereby triggering a process combining sensing and positioning, and achieving the purpose of performing sensing based on positioning information.

Optionally, after the sending the sensing requirement to a second communication device, the method further includes:
determining a first base station and a first terminal that are associated with the sensing requirement, where the second communication device includes at least one of the first base station and the first terminal.

Optionally, the positioning requirement includes first indication information, and the first indication information is information indicating the second communication device. For example, the first indication information indicates identification information of the first base station and/or the first terminal.

In this embodiment of this application, after receiving the positioning requirement, the third communication device determines a second base station and/or a second terminal associated with the positioning requirement, and sends the positioning requirement to the second base station and/or the second terminal. The method for determining the second base station and/or the second terminal may be determined according to the second communication device.

Optionally, after the sending the sensing requirement to a second communication device and sending a positioning requirement to a third communication device, the method further includes:
obtaining signal configuration information, where the signal configuration information includes at least one of configuration information for a sensing signal and configuration information for a positioning signal, and the signal configuration information is determined according to at least one of the sensing requirement and the positioning requirement; and
sending the configuration information for the sensing signal to the second communication device, and/or sending the configuration information for the positioning signal to a fourth communication device, where the fourth communication device includes at least one of a second base station and a second terminal associated with the positioning requirement.

Optionally, the signal configuration information is determined by at least one of the first communication device and the third communication device.

In this embodiment of this application, the configuration information for the sensing signal and the configuration information for the positioning signal may be determined by the first communication device, or the configuration information for the sensing signal and the configuration information for the positioning signal may be determined by the third communication device, or the configuration information for the sensing signal may be determined by the first communication device and the configuration information for the positioning signal may be determined by the second communication device, or the configuration information for the positioning signal may be determined by the first communication device and the configuration information for the sensing signal may be determined by the third communication device.

The sensing signal and the positioning signal may use the same reference signal or different reference signals. In an implementation, the sensing signal and the positioning signal use different reference signals. The reference signals may be uplink signals or downlink signals, or one is an uplink signal and the other is a downlink signal. The sensing network function/sensing network element determines the configuration information for the sensing signal according to the sensing requirement. The LMF determines the configuration information for the positioning signal according to the positioning requirement. In another implementation, the sensing signal and the positioning signal use the same reference signal, which may be an uplink signal or a downlink signal. In this implementation, a set of signal configuration information is determined, and the signal configuration information includes the configuration information for the sensing signal and the configuration information for the positioning signal, where the configuration information for the sensing signal and the configuration information for the positioning signal may be determined by one of the first communication device and the third communication device, and the determined signal configuration information is notified to the other party. In this implementation, the configuration information for the sensing signal and the configuration information for the positioning signal may alternatively be jointly determined by the first communication device and the third communication device. Specifically, one of the parties, such as the LMF, can first determine the configuration information for the positioning signal and send the configuration information for the positioning signal to the sensing network function/sensing network element, and then the sensing network function/sensing network element supplements the configuration information for the sensing signal.

Optionally, the configuration information for the sensing signal may alternatively be determined according to the sensing requirement and prior information (such as terminal location information).

Optionally, in a case that the signal configuration information includes the configuration information for the sensing signal and the configuration information for the positioning signal, the signal configuration information further includes first identification information, where
the first identification information indicates that the signal configuration information is used for positioning measurement and sensing measurement.

In a specific embodiment of this application, the sensing signal and the positioning signal use the same reference signal, and the fourth communication device is the same as the second communication device, that is, the same base station or terminal performs the sensing measurement and positioning measurement. In this case, only one of the first communication device and the third communication device needs to send the signal configuration information to the second communication device or the fourth communication device. When the configuration information for the sensing signal and the positioning signal adopts the same configuration, the first identification information indicates that the signal configuration information is used for both positioning and sensing measurement. When a measurement result is reported, the AMF knows that the measurement result needs to be sent to the first communication device and the third communication device. Alternatively, if one of the first communication device or the third communication device delivers signal configuration information or a measurement quantity through the AMF, the AMF knows to forward the signal configuration information or the measurement quantity to a sensing associated base station/UE and a positioning associated base station/UE respectively.

Optionally, after the sending the sensing requirement to a second communication device and sending a positioning requirement to a third communication device, the method further includes:
obtaining a measurement quantity, where the measurement quantity includes at least one of a sensing measurement quantity, a positioning measurement quantity, and a common measurement quantity, and the common measurement quantity is used for positioning measurement and sensing measurement; and
sending the measurement quantity to at least one of the second communication device and a fourth communication device, where the fourth communication device includes at least one of a second base station and a second terminal associated with the positioning requirement.

Optionally, the measurement quantity is determined by at least one of the first communication device and the third communication device.

Specifically, the first communication device may determine the sensing measurement and/or common measurement quantity, and the second communication device may determine the positioning measurement quantity and the common measurement quantity. The first communication device may determine the sensing measurement quantity and/or the common measurement quantity by itself, and obtain the positioning measurement quantity and/or the common measurement quantity determined by the second communication device.

Optionally, the measurement quantity includes at least one of the following:
a channel matrix H;
channel state information (Channel State Information, CSI), such as an amplitude and/or a phase of a frequency domain channel response, or I and Q signal features of the frequency domain channel response, such as I and Q signal amplitudes;
reference signal received power (Reference Signal Received Power, RSRP);
a received signal strength indication (Received Signal Strength Indication, RSSI);
a channel power delay profile (Power Delay Profile, PDP);
a Puller power spectrum;
Doppler spread;
coherence bandwidth;
coherence time;
power of each path in a multipath channel (including at least a first reach path, a line of sight (Line of Sight, LOS) path, a first-order reflection path, and a multi-order reflection path);
a delay of each path in the multipath channel;
an angle of each path in the multipath channel;
Doppler frequency shift;
a quotient or conjugate product of frequency domain channel responses of a first antenna and a second antenna;
an amplitude ratio or amplitude difference between received signals of the first antenna and the second antenna;
a phase difference between the first antenna and the second antenna;
a delay difference between the first antenna and the second antenna; and
angle-related information such as an angle of arrival and an angle of departure (including UE side angle information, base station side angle information, and reflection point angle information).

In addition, in this embodiment of this application, configuration information for a signal and the measurement quantity may alternatively be determined by the second communication device and/or the fourth communication device according to the sensing requirement and/or the positioning requirement.

Optionally, the method according to this embodiment of this application further includes:
obtaining a measurement result corresponding to the measurement quantity, where the measurement result is obtained according to signal configuration information and the measurement quantity, the signal configuration information includes at least one of configuration information for a sensing signal and configuration information for a positioning signal, and the signal configuration information is determined according to at least one of the sensing requirement and the positioning requirement.

In this embodiment of this application, the second communication device performs the sensing measurement process according to the configuration information for the sensing signal, the sensing measurement quantity, and the common measurement quantity. The specific method for performing the sensing measurement process includes at least one of the following methods: spontaneous sending or receiving by a base station, sending and receiving between base stations, sending by a base station and receiving by UE, sending by UE and receiving by a base station, spontaneous sending or receiving by UE, and sending and receiving between UEs.

The fourth communication device performs the sensing measurement process according to the configuration information for the positioning signal, the positioning measurement quantity, and the common measurement quantity. The specific process of performing positioning measurement includes at least one of the following methods: sending by a base station and receiving by UE, sending by UE and receiving by a base station, spontaneous sending or receiving by UE, and sending and receiving between UEs. The fourth communication device sends the measurement result to the LMF. The LMF calculates UE location information according to the measurement result sent by the fourth communication device, and sends the UE location information to the sensing network function/sensing network element through the AMF.

Optionally, after the obtaining a measurement result corresponding to the measurement quantity, the method further includes:
determining a sensing result according to a measurement result corresponding to a first target measurement quantity and a positioning result sent by the third communication device, where the first target measurement quantity includes at least one of the sensing measurement quantity and the common measurement quantity, the positioning result is sent by the third communication device according to the positioning requirement, and the positioning result includes terminal location information.

The positioning result sent by the third communication device may be directly fed back by the third communication device according to the positioning requirement. For example, when the positioning requirement is used to request to obtain a known positioning result, the third communication device can directly feed back the known positioning result according to the positioning requirement, that is, the positioning result includes the known positioning result.

Alternatively, the positioning result is obtained by measuring the measurement quantity by the third communication device. For example, when the positioning requirement is used to request a current positioning result or a positioning result at preset time in the future, the third communication device measures the measurement quantity to obtain the positioning result. Based on this, according to the method in embodiments of this application, before the determining a sensing result according to a measurement result corresponding to a first target measurement quantity and a positioning result sent by the third communication device, the method further includes:
sending a target measurement result corresponding to a second target measurement quantity to the third communication device, where the second target measurement quantity includes at least one of the positioning measurement quantity and the common measurement quantity; and
obtaining the positioning result determined by the third communication device according to the target measurement result.

In this implementation, the first communication device sends the target measurement result corresponding to the second target measurement quantity to the LMF. The LMF obtains the UE location information according to the target measurement result and sends the UE location information to the third communication device.

Optionally, the terminal location information includes first indication information, and the first indication information indicates a correspondence between the positioning result and the first target measurement quantity.

The first indication information may include time information or index information consistent with the first target measurement quantity.

Optionally, in this embodiment of this application, the positioning requirement may further include a type of the positioning requirement. The type of the positioning requirement includes at least one of the following:
a first positioning requirement type, where the first positioning type is used for requesting to obtain a known positioning result, for example, used for requesting to obtain a last known positioning result or an initial known positioning result;
a second positioning requirement type, where the second positioning request type is used for requesting to obtain a current positioning result; and
a third positioning requirement type, where the third positioning request type is used for requesting to obtain a positioning result at preset time in the future.

Optionally, the positioning requirement further includes second indication information, and the second indication information indicates time corresponding to the positioning result requested by the positioning requirement.

The time may be at least one of starting time, ending time, duration, a period, and a period number. Optionally, the time may be a time point or a time window. The time may be aperiodic time or periodic time. Optionally, the time is absolute time, such as expressed through universal time coordinated (Universal Time Coordinated, UTC); or relative time, such as relative to specific public time. Optionally, the time coincides with time in a positioning request.

Optionally, the sensing requirement may further include a type of the sensing requirement, and the type of the sensing requirement includes at least one of the following:
a first sensing requirement type, where the first sensing request type is used for requesting to obtain a known sensing result, for example, used for requesting to obtain a last known sensing result or an initial known sensing result;
a second sensing requirement type, where the second sensing request type is used for requesting to obtain a current sensing result; and
a third sensing requirement type, where the third sensing request type is used for requesting to obtain a sensing result at preset time in the future.

The sensing requirement further includes second indication information, and the second indication information indicates time corresponding to the sensing result requested by the sensing requirement.

The time may be at least one of starting time, ending time, duration, a period, and a period number. Optionally, the time may be a time point or a time window. The time may be aperiodic time or periodic time. Optionally, the time is absolute time, such as expressed through UTC; or relative time, such as relative to specific public time. Optionally, the time coincides with time in a positioning request.

Optionally, the sensing requirement may further include an indication of a positioning method. For example, the positioning method is a positioning method based on time or an angle, or a specific positioning method (such as a downlink time difference of arrival (Downlink Time Difference Of Arrival, DL-TDOA), a downlink angle-of-departure (Downlink Angle-of-Departure, DL-AOD), and multiplecell-round trip time (Multiplecell-Round Trip Time, multi-RTT)). The third communication device determines, according to the positioning method, a sensing result that needs to be fed back.

Optionally, the sensing requirement may further include a type of sensing feedback, such as immediate feedback, periodic feedback, and event-triggered feedback. Further, the sensing requirement includes the foregoing fed-back configuration information.

The sensing result in this embodiment of this application may be a measurement value corresponding to the measurement quantity, or may be a result obtained by calculating the measurement value corresponding to the measurement quantity.

The sensing result in this embodiment of this application may include at least one of the following:
feature information of a target object, information related to a target event, and information related to a target environment.

The feature information of the target object is understood as: information that can reflect attributes or a status of the target object, which may be at least one of the following: a location of the target object, a speed of the target object, an acceleration of the target object, a material of the target object, a shape of the target object, a type of the target object, a radar cross section (Radar Cross Section, RCS) of the target object, polarization scattering characteristics, and the like.

The information related to the target event may be understood as: information related to the target event, that is, information that can be detected/sensed when the target event occurs, which may be: fall detection, intrusion detection, quantity statistics, indoor positioning, gesture recognition, lip reading recognition, gait recognition, expression recognition, breathing monitoring, heart rate monitoring, and the like.

The information related to the target environment may be at least one of the following: humidity, brightness, temperature and humidity, atmospheric pressure, air quality, weather conditions, topography, building/vegetation distribution, population statistics, crowd density, vehicle density, and the like

In addition, as shown in FIG. 2, the interaction between the sensing network function/sensing network element and the base station and/or UE may be performed through the AMF, or through a newly defined interface, such as an Nx interface and an Ny interface.

The sensing positioning method of this application is described below with reference to specific embodiments.

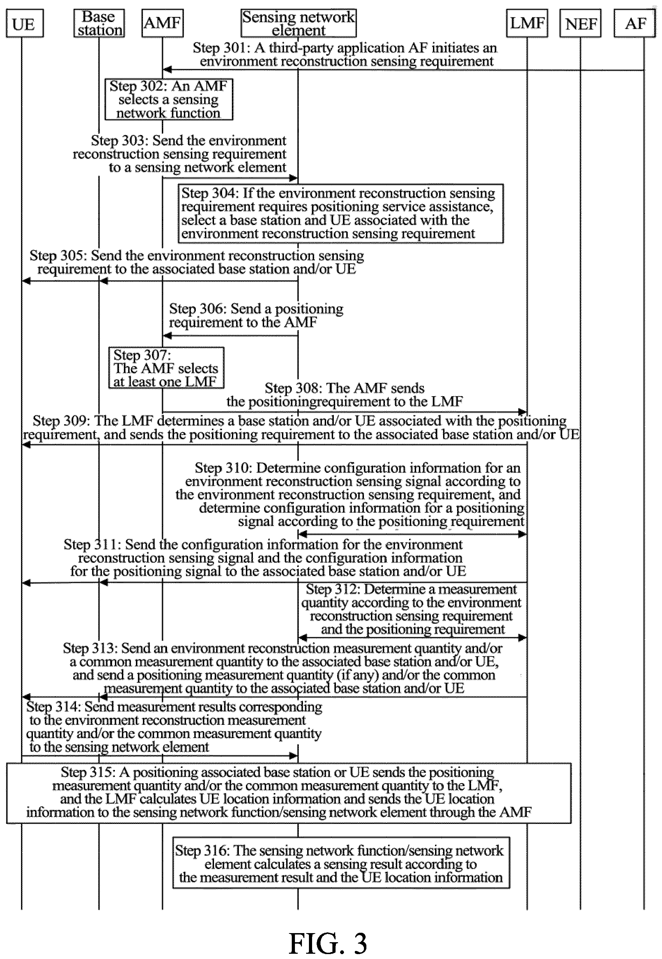

As shown in FIG. 3, the method includes:
Step 301: A third-party application (Application Function, AF) initiates an environment reconstruction sensing requirement.

The environment reconstruction sensing requirement includes at least:
an area and a scope of environment reconstruction, such as environment reconstruction within X meters near one or more base stations/UEs;
accuracy/error of environment reconstruction, such as a deviation between a size and a location of an obstacle and a true size and a true location thereof;
an environment reconstruction resolution, that is, a resolution of a reconstructed map; and
an environment reconstruction delay requirement, which may be a maximum allowable delay or an allowable delay range.

Step 302: An AMF selects a sensing network function.

Features of the sensing network function include at least one of the following:
exchanging target information with a target UE or a serving base station of the target UE or a base station associated with a target area (where the target information includes a processing sensing request, an interactive sensing capability, interactive sensing auxiliary data, an interactive sensing measurement quantity, or a sensing result), to obtain a target sensing result or a sensing measurement quantity (an uplink measurement quantity or a downlink measurement quantity);
determining a sensing method used according to a type of a possible sensing client, required sensing QoS, a UE sensing capability, a base station sensing capability, and other factors, where the sensing method includes: sending by a base station A and receiving by a base station B, or sending by a base station and receiving by UE, or spontaneous sending or receiving by the base station A, or sending by UE and receiving by a base station, or spontaneous sending or receiving by UE, or sending by UE A and receiving by UE B, and the like;
the sensing network function/sensing network element is located on a core network or base station side, where if the sensing network function/sensing network element is located on the base station side, compared with being located on the core network, all processes of sensing services can be completed in a radio access network (Radio Access Network, RAN) (for a case where the base station triggers the sensing services or the UE triggers the sensing services);
the sensing network function/sensing network element directly exchanges sensing requests and sensing results with an application server (such as an application server of an operator); or the sensing network function/sensing network element exchanges sensing requests and sensing results with the AMF, and the AMF can directly or indirectly (through a gateway mobile location center (Gateway Mobile Location Center, GMLC) and a network exposure function (Network Exposure Function, NEF)) exchange sensing requests and sensing results with an application server (such as a third-party application server);
managing overall coordination and scheduling of resources required for sensing, such as sensing resources of base stations and/or UEs;
calculating or verifying sensing results, and estimating sensing accuracy;
supporting immediate sensing requests;
supporting periodic or event-triggered sensing requests;
supporting canceling periodic or triggered sensing behaviors;
a plurality of sensing network functions/sensing network elements can correspond to one AMF, where after receiving the sensing requirement, the AMF may select one or more participating sensing network functions/sensing network elements, and factors considered when selecting include at least: a requested QoS (Such as sensing accuracy, response time, and a sensing QoS level), an access type (a 3rd generation partnership project (3rd Generation Partnership Project, 3GPP) access/non-3GPP access), an access network (Access Network, AN) type of target UE (such as 5G NR or enhanced LTE (enhanced LTE, eLTE)) and a serving AN node (such as the next Generation Node B (the next Generation Node B, gNodeB) or the next generation Evolved Node B (next generation Evolved Node B, NG-eNodeB)), RAN configuration information, a sensing network function/sensing network element capability, a sensing network function/sensing network element load, a sensing network function/sensing network element location, an indication indicating single event reporting or multiple event reporting, event reporting duration, network slicing information, and the like; and
the sensing network function/sensing network element may be a new network element, or an existing network function/network element such as an LMF, with new sensing-related functions added.

A core network network function or network element (such as a sensing network function/sensing network element) or an application server or another node completes a supervision process.

Step 303: The AMF sends the environment reconstruction sensing requirement to the sensing network element.

Step 304: If the environment reconstruction sensing requirement requires positioning service assistance, select a base station and UE associated with the environment reconstruction sensing requirement.

A method for selecting a base station and UE associated with the environment reconstruction sensing requirement may be:
selecting a base station in the corresponding area and UE accessing the base station according to the area and the scope of environment reconstruction; or
using a base station or UE that initiates the environment reconstruction sensing requirement as the associated base station or UE.

Step 305: Send the environment reconstruction sensing requirement to the associated base station and/or UE.

Step 306: Send a positioning requirement to the AMF.

Step 307: The AMF selects at least one LMF.

Step 308: The AMF sends the positioning requirement to the LMF.

The positioning requirement is obtained according to the environment reconstruction sensing requirement, including at least one of the following:
determining positioning accuracy/error requirements according to environment reconstruction accuracy/error requirements; and
determining positioning delay requirements according to environment reconstruction delay requirements.

In addition, the positioning requirement may include the base station and/or the UE associated with the environment reconstruction sensing requirement, to assist the LMF in selecting the base station and/or the UE associated with the environment reconstruction sensing requirement.

Step 309: The LMF determines a base station and/or UE associated with the positioning requirement, and sends the positioning requirement to the associated base station and/or UE.

A method for selecting the base station and/or the UE associated with the positioning requirement may be to select the corresponding base station and UE according to the base station and/or the UE associated with the sensing requirement.

Step 310: Determine configuration information for an environment reconstruction sensing signal according to the environment reconstruction sensing requirement, and determine configuration information for a positioning signal according to the positioning requirement.

Optionally, the configuration information for the environment reconstruction sensing signal is determined according to the environment reconstruction sensing requirement and positioning information obtained last time a positioning process is triggered.

Optionally, the sensing signal and the positioning signal use different reference signals, which may be uplink signals or downlink signals, or one is an uplink signal and the other is a downlink signal. The sensing network function/sensing network element determines a sensing signal configuration according to the environment reconstruction sensing requirement. The LMF determines a positioning signal configuration according to the positioning requirement.

Optionally, the sensing signal and the positioning signal use the same reference signals, which may be uplink signals or downlink signals, or one is an uplink signal and the other is a downlink signal.

The configuration information for the sensing signal and the configuration information for the positioning signal are determined by one of the sensing network function/sensing network element and the LMF, and the corresponding signal configuration information is notified to the other party through the AMF.

Alternatively, the configuration information for the sensing signal and the configuration information for the positioning signal are jointly determined by both parties. The method may be that for a specific signal configuration, the party with higher requirements for the signal configuration determines the signal configuration. For example, the environment reconstruction sensing requirement requires a larger signal bandwidth compared with positioning. Therefore, the signal bandwidth is determined by the sensing network function/sensing network element according to the environment reconstruction requirement. The specific method may be that one of the parties, such as the LMF, first determines the configuration of the positioning signal and then sends the configuration to the sensing network function/sensing network element. The sensing network function/sensing network element supplements the configuration of the sensing signal, and then sends the configuration directly to the associated base station and/or UE.

The configuration information for the sensing signal or the positioning signal includes at least one of the following:
a waveform, such as orthogonal frequency division multiplex (Orthogonal Frequency Division Multiplex, OFDM), SC-FDMA, orthogonal time frequency space (Orthogonal Time Frequency Space, OTFS), a frequency modulated continuous wave (Frequency Modulated Continuous Wave, FMCW), and a pulse signal;
a subcarrier spacing: for example, a subcarrier spacing of an OFDM system is 30 KHz;
a guard interval: a time interval between a moment at which sending of a signal ends to a moment at which a latest echo signal of the signal is received, where this parameter is proportional to a maximum sensing distance, and for example, may be calculated by 2dmax/c, dmax being the maximum sensing distance (belonging to the sensing requirement); for example, for a spontaneously sent or received sensing signal, dmax represents a maximum distance between a sensing signal transmitting and receiving point to a signal transmitting point; and in some cases, an OFDM signal cyclic prefix (Cyclic Prefix, CP) can play the role of minimum guard interval, where c is the speed of light;
a bandwidth: this parameter is inversely proportional to a distance resolution and can be obtained through c/2/delta_d, where delta_d is the distance resolution (belonging to the sensing requirement);
burst duration: this parameter is inversely proportional to a rate resolution (belonging to the sensing requirement), where this parameter is a time span of the sensing signal, mainly for calculating the Doppler frequency offset; and this parameter may be calculated through c/2/delta_v/fc, where delta_v is a speed resolution, and fc is a signal carrier frequency or a center frequency point of the signal;
a time domain interval: this parameter may be calculated through c/2/fc/v_range, where v_range is the maximum rate minus the minimum speed (belonging to the sensing requirement), and this parameter is a time interval between two adjacent sensing signals;
sending signal power, for example, take a value every 2 dBm from -20 dBm to 23 dBm;
a signal format, such as a demodulation reference signal (Demodulation Reference Signal, DMRS), channel state information-reference signal (Channel State Information-Reference Signal, CSI-RS), a sounding reference signal (Sounding Reference Signal, SRS), a phase reference signal (Tracking Reference Signal, TRS), a phase-tracking reference signal (Phase-Tracking Reference Signal, PT-RS), or a positioning reference signal (Positioning Reference Signal, PRS), or may be a data signal, or a newly defined sensing signal, or a newly defined communication sensing integrated signal, and a related sequence format and other information;
a signal direction; such as a sensing signal direction or beam information;
a time resource, such as a slot index where the sensing signal is located or a symbol index of a slot, where time resources are divided into two types, one is a one-time time resource, for example, one symbol sends an omnidirectional first signal; the other is a non-disposable time resource, for example, a plurality of groups of periodic time resources or discontinuous time resources (which may include start time and end time), where each group of periodic time resources sends sensing signals in the same direction, and beam directions on different groups of periodic time resources are different;
a frequency resource, including a center frequency point of the sensing signal, a bandwidth, a resource block (Resource Block, RB), a subcarrier, or the like; and
a quasi co-location (Quasi co-location, QCL) relationship, for example, the sensing signal includes a plurality of resources, each resource is QCL with a synchronization signal block (Synchronization Signal Block, SSB), and the QCL includes a Type A, B, C, or D.

In particular, if the environment reconstruction sensing signal and the positioning signal are not the same reference signal, when determining a signal time resource configuration, it is necessary to limit a time interval between an environment reconstruction sensing reference signal and a positioning reference signal to be less than a specific range, for example, less than X time units. The time unit may be a transmission time interval (Transmission Time Interval, TTI), a slot, a sub-slot, a symbol, or the like. The time interval is associated with environment reconstruction delay requirements, positioning delay requirements, and a UE movement speed.

Step 311: The sensing network function/sensing network element and the LMF respectively send the configuration information for the environment reconstruction sensing signal and the configuration information for the positioning signal to the associated base station and/or UE.

In particular, if the same reference signal is used for environment reconstruction sensing and positioning, the base station and/or UE for the positioning requirement are the same as the base station and/or UE for the sensing requirement, and the base stations/UEs that perform a measurement process (a sensing measurement process and a positioning measurement process) are the same, only one of the sensing network function/sensing network element and the LMF is required to send the configuration to the UE/base station. When the same configuration is used, the signal configuration information includes identification information to identify whether the signal is used for positioning and sensing at the same time (which, for example, is indicated by a 1-bit information field, where when the information field is "0", it means that the signal is not used for positioning and sensing at the same time; and when the information field is "1", it means that the signal is used for both positioning and sensing).

Step 312: Determine a measurement quantity according to the environment reconstruction sensing requirement and the positioning requirement.

The measurement quantity includes at least:
a common measurement quantity, that is, a measurement quantity common to the sensing requirement and the positioning requirement, which is determined by one of the sensing network function/sensing network element and the LMF, where corresponding measurement quantity information is notified to the other party through the AMF, or determined by both; and
a non-common measurement quantity, that is, respective measurement quantities of the sensing requirement and the positioning requirement (a positioning measurement quantity and an environment reconstruction measurement quantity), which are determined by the sensing network function/sensing network element and the LMF respectively.

The environment reconstruction measurement quantity may be:
a reflection path delay, a delay difference between reflection paths, a distance of a reflection point relative to the UE/base station, an angle of arrival and an angle of departure of a signal relative to the reflection point, an angle of arrival and an angle of departure of a base station side reflection path, an angle of arrival and an angle of departure of a UE side reflection path, reflection path signal strength, a reflection path reflection order identifier (such as first-order reflection or multi-order reflection), UE local coordinate system related information (such as a UE orientation or a UE antenna panel orientation, a local coordinate origin, and a local coordinates x/y/z axis direction), reflection point coordinates in a reference coordinate system based on the base station, reflection point coordinates in a reference coordinate system based on the UE, or reflection point coordinates in a global coordinate system (where the global coordinate system may be a common reference coordinate system for a plurality of base stations or UEs).

The positioning measurement quantity may be:
a direct path delay, a reflection path delay, a delay difference between reflection paths, a first reach path (which may be a direct path or a reflection path) delay, an angle of arrival and an angle of departure of a signal relative to a reflection point, an angle of arrival and an angle of departure of a base station side multipath signal, an angle of arrival and an angle of departure of a UE side multipath signal, direct path signal strength, reflection path signal strength, first reach path signal strength, a reflection path reflection order identifier (such as first-order reflection or multi-order reflection), or time or a time difference between different base station signals reaching the UE.

The common measurement quantity may be:
a reflection path delay, a delay difference between reflection paths, a distance of a reflection point relative to the UE/base station, an angle of arrival and angle of departure of a signal relative to the reflection point, an angle of arrival and angle of departure of a base station side reflection path, an angle of arrival and angle of departure of a UE side reflection path, signal strength of the reflection path, or a reflection path reflection order identifier (such as first-order reflection or multi-order reflection).

In particular, the measurement quantity may include only the sensing measurement quantity and the common measurement quantity, without the positioning measurement quantity.

Step 313: The sensing network function/sensing network element sends the environment reconstruction measurement quantity and/or the common measurement quantity to the associated base station and/or UE, and the LMF sends the positioning measurement quantity (if any) and/or the common measurement quantity to the associated base station and/or UE.

Specifically, a manner in which the environment reconstruction measurement quantity and/or the common measurement quantity is sent to the associated base station by the sensing network function/sensing network element may be:
first sent to the AMF, and then sent by the AMF to the base station through an N2 interface; or
sent directly to the base station through a newly defined interface.

A manner in which the environment reconstruction measurement quantity and/or the common measurement quantity is sent to the associated UE by the sensing network function/sensing network element may be:
first sent to the AMF, then sent by the AMF to the base station through the N2 interface, and then sent to the UE by the base station through higher layer signaling or medium access control control element (Medium Access Control Control Element, MAC CE) signaling or layer 1 signaling, such as downlink control information (Downlink Control Information, DCI);
sent directly to the base station through the newly defined interface, and then sent to the UE by the base station through the higher layer signaling or the MAC CE signaling or the layer 1 signaling (such as DCI); or
sent to the UE through NAS signaling.

Alternatively, all the measurement quantities are sent by one of the parties to the associated base station and/or UE.

In this embodiment of this application, a manner in which the associated base station and/or UE performs the environment reconstruction measurement process according to an environment reconstruction sensing signal configuration, the sensing measurement quantity, and the common measurement quantity includes at least one of the following: spontaneous sending or receiving by a base station, sending and receiving between base stations, sending by a base station and receiving by UE, sending by UE and receiving by a base station, spontaneous sending or receiving by UE, and sending and receiving between UEs.

A manner in which the associated base station and/or UE performs the positioning process according to the positioning signal configuration, the positioning measurement quantity, and the common measurement quantity includes at least one of the following: sending by a base station and receiving by UE, sending by UE and receiving by a base station, spontaneous sending or receiving by UE, and sending and receiving between UEs.

In particular, if the same reference signal and the same measurement quantity are used for environment reconstruction and positioning, that is, there are only the environment reconstruction measurement quantity and the common measurement quantity, without the positioning measurement quantity, the base station and/or UE associated with the positioning requirement is the same as the base station and/or UE associated with the sensing requirement, and the base stations/UEs that perform the measurement process (the sensing measurement process and the positioning measurement process) are the same, only the environment reconstruction measurement process needs to be performed, and the environment reconstruction measurement manner includes a positioning measurement manner (that is, the UE participates in the measurement), for example, including at least one of sending by a base station and receiving by UE, sending by UE and receiving by a base station, spontaneous sending or receiving by UE, and sending and receiving between UEs.

Step 314: The sensing associated base station and/or UE sends a measurement result corresponding to the environment reconstruction measurement quantity and/or the common measurement quantity to the sensing network function/sensing network element.

Step 315: The positioning associated base station or UE sends the positioning measurement quantity and/or the common measurement quantity to the LMF, and the LMF calculates UE location information and sends the UE location information to the sensing network function/sensing network element through the AMF.

Alternatively, the sensing network function/sensing network element sends the common measurement quantity to the LMF through the AMF, and the LMF calculates the UE location information and sends the UE location information to the sensing network function/sensing network element through the AMF (corresponding to the case with only the environment reconstruction measurement quantity and the common measurement quantity, without the positioning measurement quantity). In particular, the UE location information includes information indicating the correspondence with the environment reconstruction measurement quantity and/or the common measurement quantity, such as time information, which may be absolute time, a frame number, a TTI sequence number, a slot number, a sub-slot number, a symbol sequence number, and the like (where the environment reconstruction measurement quantity and/or the common measurement quantity includes the same time information), or index information consistent with the environment reconstruction measurement quantity and/or the common measurement quantity. For example, the environment reconstruction measurement quantity measured by the UE at a location 1 is reflection point coordinates, and an index number of the coordinates is X. Information about the UE at the location 1 is obtained through the positioning process, and a location information index is also X.

Step 316: The sensing network function/sensing network element calculates a sensing result according to the measurement result and the UE location information.

The measurement result in this step is specifically a measurement result corresponding to the environment reconstruction measurement quantity and/or the common measurement quantity.

According to the sensing positioning method in this embodiment of this application, the sensing requirement is received. In a case that the sensing requirement is a sensing requirement associated with the positioning service, the sensing requirement is sent to the second communication device, and the positioning requirement is sent to the third communication device, thereby triggering a process combining sensing and positioning, and achieving the purpose of performing sensing based on positioning information.

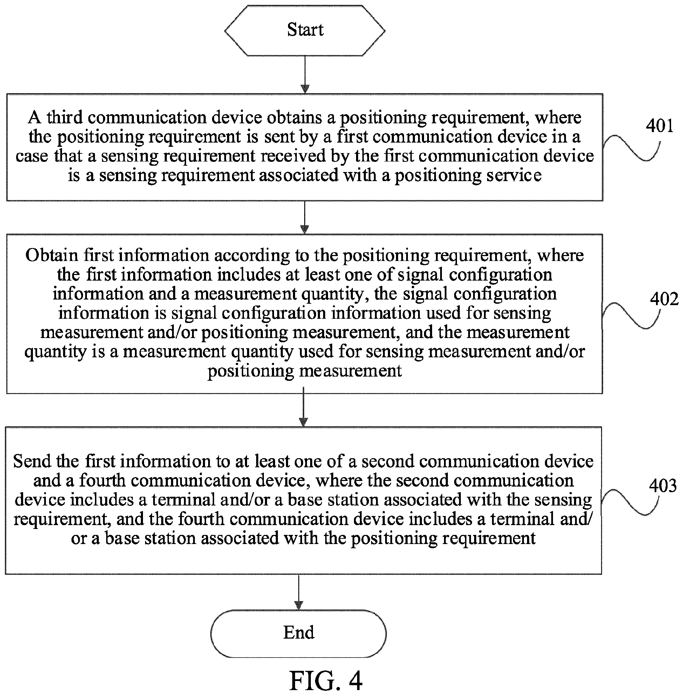

As shown in FIG. 4, an embodiment of this application further provides a sensing positioning method, including:
Step 401: A third communication device obtains a positioning requirement, where the positioning requirement is sent by a first communication device in a case that a sensing requirement received by the first communication device is a sensing requirement associated with a positioning service.

The third communication device may be a location management function (Location Management Function, LMF).

Step 402: The third communication device obtains first information according to the positioning requirement, where the first information includes at least one of signal configuration information and a measurement quantity, the signal configuration information is signal configuration information used for sensing measurement and/or positioning measurement, and the measurement quantity is a measurement quantity used for sensing measurement and/or positioning measurement.

Step 403: The third communication device sends the first information to at least one of a second communication device and a fourth communication device, where the second communication device includes a terminal and/or a base station associated with the sensing requirement, and the fourth communication device includes a terminal and/or a base station associated with the positioning requirement.

According to this embodiment of this application, the third communication device obtains a positioning requirement, where the positioning requirement is sent by a first communication device in a case that a sensing requirement received by the first communication device is a sensing requirement associated with a positioning service; obtains first information according to the positioning requirement, where the first information includes at least one of signal configuration information and a measurement quantity, the signal configuration information is signal configuration information used for sensing measurement and/or positioning measurement, and the measurement quantity is a measurement quantity used for sensing measurement and/or positioning measurement; and sends the first information to at least one of a second communication device and a fourth communication device, where the second communication device includes a terminal and/or a base station associated with the sensing requirement, and the fourth communication device includes a terminal and/or a base station associated with the positioning requirement. In this way, the purpose of performing sensing based on positioning information is achieved.

Optionally, after that the third communication device obtains a positioning requirement, the method further includes:
determining a fourth communication device associated with the positioning requirement.

Optionally, the signal configuration information includes at least one of configuration information for a sensing signal and configuration information for a positioning signal.

Optionally, in a case that the signal configuration information includes the configuration information for the sensing signal and the configuration information for the positioning signal, the signal configuration information further includes first identification information, where
the first identification information indicates that the signal configuration information is used for positioning measurement and sensing measurement.

Optionally, the signal configuration information is determined by at least one of the first communication device and the third communication device.

Optionally, the measurement quantity includes at least one of a sensing measurement quantity, a positioning measurement quantity, and a common measurement quantity, and the common measurement quantity is used for positioning measurement and sensing measurement.

Optionally, the measurement quantity is determined by at least one of the first communication device and the third communication device.

Optionally, the method according to this embodiment of this application further includes:

determining a positioning result according to the positioning requirement, where the positioning result includes terminal location information; and
sending the positioning result to the first communication device.

Optionally, the determining a positioning result according to the positioning requirement includes:
obtaining a target measurement result corresponding to a second target measurement quantity sent by a target communication device, where the second target measurement quantity includes at least one of a positioning measurement quantity and a common measurement quantity, and the target communication device includes the first communication device or the fourth communication device; and
determining the positioning result according to the target measurement result.

Optionally, the terminal location information includes first indication information, the first indication information indicates a correspondence between the terminal location information and a second target measurement quantity, and the second target measurement quantity includes at least one of a sensing measurement quantity and a common measurement quantity.

Optionally, the positioning result includes a known positioning result.

Optionally, a type of the positioning requirement includes at least one of the following:
a first positioning requirement type, where the first positioning type is used for requesting to obtain a known positioning result;
a second positioning requirement type, where the second positioning request type is used for requesting to obtain a current positioning result; and
a third positioning requirement type, where the third positioning request type is used for requesting to obtain a positioning result at preset time in the future.

Optionally, the determining a positioning result according to the positioning requirement includes:
determining the positioning result corresponding to the positioning requirement according to the known positioning result in a case that the type of the positioning requirement is the first positioning requirement type.

It should be noted that the sensing positioning method performed by the third communication device is a sensing positioning method corresponding to the sensing positioning method performed by the foregoing first communication device. The specific implementation process has been described in the method embodiment of the foregoing first communication device. Details are not described herein again.

It should be noted that, for the sensing positioning method provided in embodiments of this application, the execution body may be a sensing positioning apparatus, or a control module in the sensing positioning apparatus for performing the sensing positioning method. In this embodiment of this application, the sensing positioning apparatus provided in embodiments of this application is described by taking the sensing positioning method performed by the sensing positioning apparatus as an example.

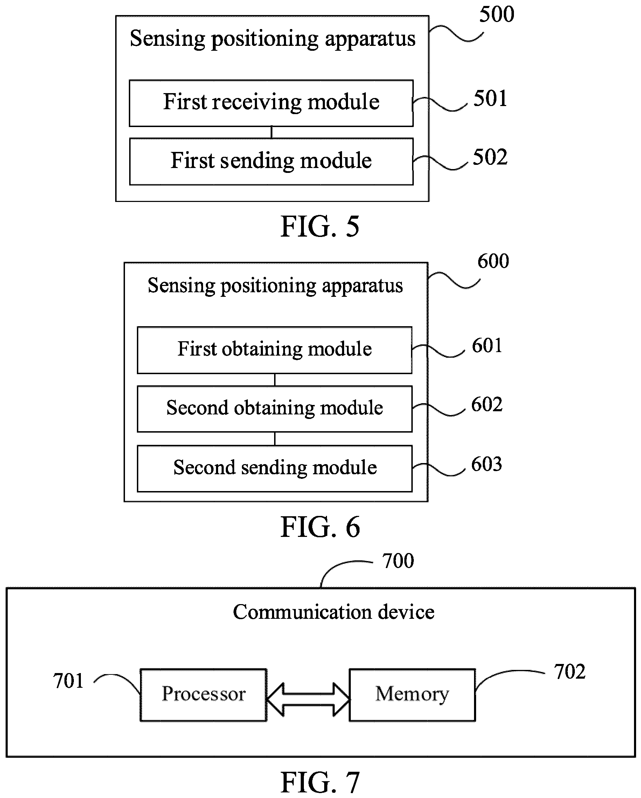

As shown in FIG. 5, an embodiment of this application further provides a sensing positioning apparatus 500, including:
a first receiving module 501, configured to receive a sensing requirement; and
a first sending module 502, configured to send, in a case that the sensing requirement is a sensing requirement associated with a positioning service, the sensing requirement to a second communication device, and send a positioning requirement to a third communication device.

Optionally, the apparatus according to this embodiment of this application further includes:
a first determining module, configured to determine, before the first sending module sends the sensing requirement to the second communication device, a first base station and a first terminal that are associated with the sensing requirement, where the second communication device includes at least one of the first base station and the first terminal.

Optionally, the positioning requirement includes first indication information, and the first indication information is information indicating the second communication device.

Optionally, the apparatus according to this embodiment of this application further includes:
a third obtaining module, configured to obtain signal configuration information after the first sending module sends the sensing requirement to the second communication device and sends the positioning requirement to the third communication device, where the signal configuration information includes at least one of configuration information for a sensing signal and configuration information for a positioning signal, and the signal configuration information is determined according to at least one of the sensing requirement and the positioning requirement; and
a third sending module, configured to send the configuration information for the sensing signal to the second communication device, and/or send the configuration information for the positioning signal to a fourth communication device, where the fourth communication device includes at least one of a second base station and a second terminal associated with the positioning requirement.

Optionally, the signal configuration information is determined by at least one of the first communication device and the third communication device.

Optionally, in a case that the signal configuration information includes the configuration information for the sensing signal and the configuration information for the positioning signal, the signal configuration information further includes first identification information, where
the first identification information indicates that the signal configuration information is used for positioning measurement and sensing measurement.

Optionally, the apparatus according to this embodiment of this application further includes:
a fourth obtaining module, configured to obtain a measurement quantity after the first sending module sends the sensing requirement to the second communication device and sends the positioning requirement to the third communication device, where the measurement quantity includes at least one of a sensing measurement quantity, a positioning measurement quantity, and a common measurement quantity, and the common measurement quantity is used for positioning measurement and sensing measurement; and
a fourth sending module, configured to send the measurement quantity to at least one of the second communication device and a fourth communication device, where the fourth communication device includes at least one of a second base station and a second terminal associated with the positioning requirement.

Optionally, the measurement quantity is determined by at least one of the first communication device and the third communication device.

Optionally, the apparatus according to this embodiment of this application further includes:
a fifth obtaining module, configured to obtain a measurement result corresponding to the measurement quantity, where the measurement result is obtained according to signal configuration information and the measurement quantity, the signal configuration information includes at least one of configuration information for a sensing signal and configuration information for a positioning signal, and the signal configuration information is determined according to at least one of the sensing requirement and the positioning requirement.

Optionally, the apparatus according to this embodiment of this application further includes:

a second determining module, configured to determine, after the fifth obtaining module obtains the measurement result corresponding to the measurement quantity, a sensing result according to a measurement result corresponding to a first target measurement quantity and a positioning result sent by the third communication device, where the first target measurement quantity includes at least one of the sensing measurement quantity and the common measurement quantity, the positioning result is sent by the third communication device according to the positioning requirement, and the positioning result includes terminal location information.

Optionally, the apparatus according to this embodiment of this application further includes:
a fifth sending module, configured to send, before the second determining module determines the sensing result according to the measurement result corresponding to the first target measurement quantity and the positioning result sent by the third communication device, a target measurement result corresponding to a second target measurement quantity to the third communication device, where the second target measurement quantity includes at least one of the positioning measurement quantity and the common measurement quantity; and
a sixth obtaining module, configured to obtain the positioning result determined by the third communication device according to the target measurement result.

Optionally, according to the apparatus in this embodiment of this application, the terminal location information includes first indication information, and the first indication information indicates a correspondence between the positioning result and the first target measurement quantity.

Optionally, the positioning result includes a known positioning result.

Optionally, according to the apparatus in this embodiment of this application, a type of the positioning requirement includes at least one of the following:
a first positioning requirement type, where the first positioning type is used for requesting to obtain a known positioning result;
a second positioning requirement type, where the second positioning request type is used for requesting to obtain a current positioning result; and
a third positioning requirement type, where the third positioning request type is used for requesting to obtain a positioning result at preset time in the future.

Optionally, according to the apparatus in this embodiment of this application, the positioning requirement further includes second indication information, and the second indication information indicates time corresponding to the positioning result requested by the positioning requirement.

According to the apparatus in this embodiment of this application, the sensing requirement is received. In a case that the sensing requirement is a sensing requirement associated with the positioning service, the sensing requirement is sent to the second communication device, and the positioning requirement is sent to the third communication device, thereby triggering a process combining sensing and positioning, and achieving the purpose of performing sensing based on positioning information.

As shown in FIG. 6, an embodiment of this application further provides a sensing positioning apparatus 600, including:
a first obtaining module 601, configured to obtain a positioning requirement, where the positioning requirement is sent by a first communication device in a case that a sensing requirement received by the first communication device is a sensing requirement associated with a positioning service;
a second obtaining module 602, configured to obtain first information according to the positioning requirement, where the first information includes at least one of signal configuration information and a measurement quantity, the signal configuration information is signal configuration information used for sensing measurement and/or positioning measurement, and the measurement quantity is a measurement quantity used for sensing measurement and/or positioning measurement; and
a second sending module 603, configured to send the first information to at least one of a second communication device and a fourth communication device, where the second communication device includes a terminal and/or a base station associated with the sensing requirement, and the fourth communication device includes a terminal and/or a base station associated with the positioning requirement.

Optionally, the apparatus according to this embodiment of this application further includes:
a third determining module, configured to determine a fourth communication device associated with the positioning requirement after the first obtaining module obtains the positioning requirement.

Optionally, according to the apparatus in this embodiment of this application, the signal configuration information includes at least one of configuration information for a sensing signal and configuration information for a positioning signal.

Optionally, according to the apparatus in this embodiment of this application, in a case that the signal configuration information includes the configuration information for the sensing signal and the configuration information for the positioning signal, the signal configuration information further includes first identification information, where
the first identification information indicates that the signal configuration information is used for positioning measurement and sensing measurement.

Optionally, according to the apparatus in this embodiment of this application, the signal configuration information is determined by at least one of the first communication device and the third communication device.

Optionally, according to the apparatus in this embodiment of this application, the measurement quantity includes at least one of a sensing measurement quantity, a positioning measurement quantity, and a common measurement quantity, and the common measurement quantity is used for positioning measurement and sensing measurement.

Optionally, according to the apparatus in this embodiment of this application, the measurement quantity is determined by at least one of the first communication device and the third communication device.

Optionally, the apparatus according to this embodiment of this application further includes:
a fourth determining module, configured to determine a positioning result according to the positioning requirement, where the positioning result includes terminal location information; and
a sixth sending module, configured to send the positioning result to the first communication device.

Optionally, according to the apparatus in this embodiment of this application, the fourth determining module includes:
a first obtaining submodule, configured to obtain a target measurement result corresponding to a second target measurement quantity sent by a target communication device, where the second target measurement quantity includes at least one of a positioning measurement quantity and a common measurement quantity, and the target communication device includes the first communication device or the fourth communication device; and
a first determining submodule, configured to determine the positioning result according to the target measurement result.

Optionally, according to the apparatus in this embodiment of this application, the terminal location information includes first indication information, the first indication information indicates a correspondence between the terminal location information and a second target measurement quantity, and the second target measurement quantity includes at least one of a sensing measurement quantity and a common measurement quantity.

Optionally, according to the apparatus in this embodiment of this application, a type of the positioning requirement includes at least one of the following:
a first positioning requirement type, where the first positioning type is used for requesting to obtain a known positioning result;
a second positioning requirement type, where the second positioning request type is used for requesting to obtain a current positioning result; and
a third positioning requirement type, where the third positioning request type is used for requesting to obtain a positioning result at preset time in the future.

Optionally, according to the apparatus in this embodiment of this application, the fourth determining module is configured to determine the positioning result corresponding to the positioning requirement according to the known positioning result in a case that the type of the positioning requirement is the first positioning requirement type.

Optionally, as shown in FIG. 7, an embodiment of this application further provides a communication device 700, including a processor 701, a memory 702, and a program or instructions stored in the memory 702 and executable on the processor 701, where the program or the instructions, when executed by the processor 701, implement the processes of the embodiments of the foregoing sensing positioning method, and can achieve the same technical effects. To avoid repetition, details are not described herein again.

An embodiment of this application further provides a communication device. The communication device may be specifically the first communication device or the third communication device above. The communication device includes a processor and a communication interface. When the communication device is the foregoing first communication device, the communication interface is configured to receive a sensing requirement; and send, in a case that the sensing requirement is a sensing requirement associated with a positioning service, the sensing requirement to a second communication device, and send a positioning requirement to a third communication device.

When the communication device is the foregoing third communication device, the communication interface is configured to obtain a positioning requirement, where the positioning requirement is sent by a first communication device in a case that a sensing requirement received by the first communication device is a sensing requirement associated with a positioning service. The processor is configured to obtain first information according to the positioning requirement, where the first information includes at least one of signal configuration information and a measurement quantity, the signal configuration information is signal configuration information used for sensing measurement and/or positioning measurement, and the measurement quantity is a measurement quantity used for sensing measurement and/or positioning measurement. The communication interface is configured to send the first information to at least one of a second communication device and a fourth communication device, where the second communication device includes a terminal and/or a base station associated with the sensing requirement, and the fourth communication device includes a terminal and/or a base station associated with the positioning requirement.

The communication device embodiment corresponds to the foregoing communication device method embodiment. Each implementation process and implementation of the foregoing method embodiment can be applied to this communication device embodiment, and can achieve the same technical effects.

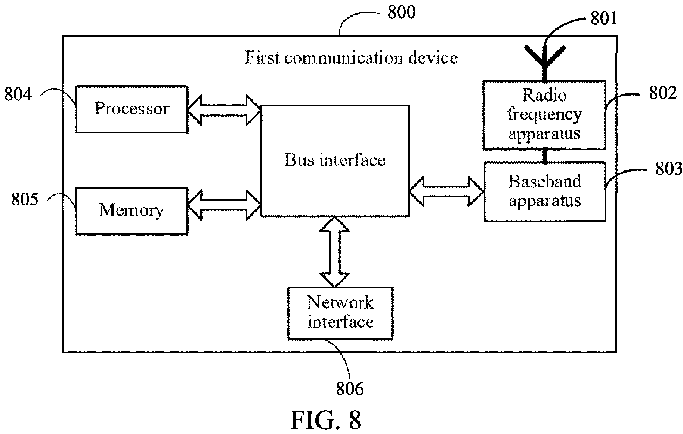

Specifically, an embodiment of this application further provides a communication device. Optionally, the communication device is the foregoing first communication device. As shown in FIG. 8, the communication device 800 includes: an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes information to be sent, and sends the information to the radio frequency apparatus 802. The radio frequency apparatus 802 processes the received information and sends the information by using the antenna 801.

The frequency band processing apparatus may be located in the baseband apparatus 803, and the method performed by the communication device in the foregoing embodiment may be implemented in the baseband apparatus 803, where the baseband apparatus 803 includes a processor 804 and a memory 905.

The baseband apparatus 803 may include, for example, at least one baseband plate. A plurality of chips are disposed on the baseband plate. As shown in FIG. 8, one of the plurality of chips is, for example, the processor 804, and is connected to the memory 805, to invoke a program in the memory 905 to perform operations of the first communication device in the foregoing method embodiment.

The baseband apparatus 803 may further include a network interface 806, configured to exchange information with the radio frequency apparatus 802. The interface is, for example, a common public radio interface (Common Public Radio Interface, CPRI).

Specifically, the communication device (first communication device) in this embodiment of this application further includes: instructions or a program stored in the memory 805 and runnable on the processor 804. The processor 804 invokes the instructions or the program in the memory 805 to perform the method executed by each module shown in FIG. 5, and achieve the same technical effects. To avoid repetition, details are not repeated herein.

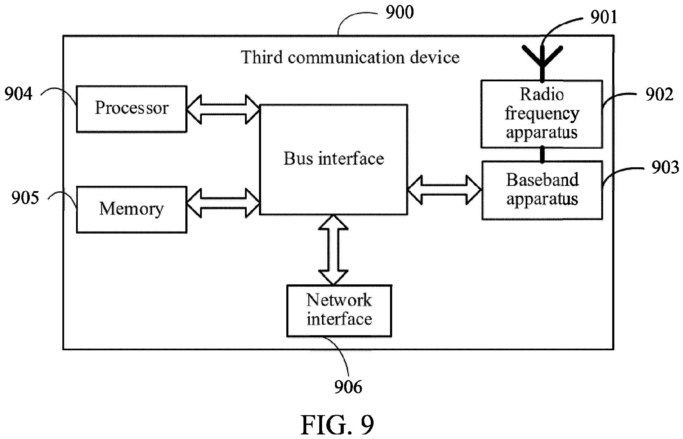

An embodiment of this application further provides a communication device. The communication device may be specifically the foregoing third communication device. As shown in FIG. 9, the communication device 900 includes an antenna 901, a radio frequency apparatus 902, and a baseband apparatus 903. The baseband apparatus 903 processes to be sent information.

The frequency band processing apparatus may be located in the baseband apparatus 903, and the method performed by the communication device in the foregoing embodiment may be implemented in the baseband apparatus 903, where the baseband apparatus 903 includes a processor 904 and a memory 905.

The baseband apparatus 903 may include, for example, at least one baseband plate. A plurality of chips are disposed on the baseband plate. As shown in FIG. 9, one of the plurality of chips is, for example, the processor 904, and is connected to the memory 905, to invoke a program in the memory 905 to perform operations of the third communication device in the foregoing method embodiment.

The baseband apparatus 903 may further include a network interface 906, configured to exchange information with the radio frequency apparatus 902. The interface is, for example, a CPRI.

Specifically, the communication device (third communication device) in this embodiment of this application further includes: instructions or a program stored in the memory 905 and runnable on the processor 904. The processor 904 invokes the instructions or the program in the memory 905 to perform the method executed by each module shown in FIG. 6, and achieve the same technical effects. To avoid repetition, details are not repeated herein.

An embodiment of this application further provides a readable storage medium. The readable storage medium stores a program or instructions, where the program or the instructions, when executed by a processor, implement the processes of embodiments of the foregoing sensing positioning method, and achieve the same technical effects. To avoid repetition, details are not described herein again.

The processor is the processor in the terminal described in the foregoing embodiment. The readable storage medium includes a computer-readable storage medium, and is, for example, a read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions, to implement the processes of embodiments of the foregoing sensing positioning method, and achieve the same technical effects. To avoid repetition, details are not described herein again.

It should be understood that, the chip described in this embodiment of this application may also be referred to as a system-level chip, a system chip, a chip system, a system on chip, or the like.

An embodiment of this application further provides a computer program/program product, stored in a non-transient storage medium, where the computer program/program product is executed by at least one processor to implement the processes of the embodiments of the foregoing sensing positioning method, and can achieve the same technical effects. To avoid repetition, details are not described herein again.

It should be noted that the term " include", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in the implementations of this application is not limited to performing the functions in the order shown or discussed, but may further include performing the functions in a substantially simultaneous manner or in the reverse order depending on the functions involved. For example, the described method may be performed in an order different from that described, and various steps may be further added, omitted, or combined. In addition, features described with reference to some examples may be combined in other examples.

Through the descriptions of the foregoing implementations, a person skilled in the art may clearly understand that the methods in the foregoing embodiments may be implemented via software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, a communication device, or the like) to perform the method described in embodiments of this application.
embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A sensing positioning method, comprising:
receiving, by a first communication device, a sensing requirement; and
sending, by the first communication device in a case that the sensing requirement is a sensing requirement associated with a positioning service, the sensing requirement to a second communication device, and sending a positioning requirement to a third communication device.

2. The method according to claim 1, wherein after the sending the sensing requirement to a second communication device, the method further comprises:
determining a first base station and a first terminal that are associated with the sensing requirement, wherein the second communication device comprises at least one of the first base station and the first terminal.

3. The method according to claim 1 or 2, wherein the positioning requirement comprises first indication information, and the first indication information is information indicating the second communication device.

4. The method according to claim 1, wherein after the sending the sensing requirement to a second communication device and sending a positioning requirement to a third communication device, the method further comprises:
obtaining signal configuration information, wherein the signal configuration information comprises at least one of configuration information for a sensing signal and configuration information for a positioning signal, and the signal configuration information is determined according to at least one of the sensing requirement and the positioning requirement; and
sending the configuration information for the sensing signal to the second communication device, and/or sending the configuration information for the positioning signal to a fourth communication device, wherein the fourth communication device comprises at least one of a second base station and a second terminal associated with the positioning requirement.

5. The method according to claim 4, wherein the signal configuration information is determined by at least one of the first communication device and the third communication device.

6. The method according to claim 4, wherein in a case that the signal configuration information comprises the configuration information for the sensing signal and the configuration information for the positioning signal, the signal configuration information further comprises first identification information, wherein
the first identification information indicates that the signal configuration information is used for positioning measurement and sensing measurement.

7. The method according to claim 1, wherein after the sending the sensing requirement to a second communication device and sending a positioning requirement to a third communication device, the method further comprises:
obtaining a measurement quantity, wherein the measurement quantity comprises at least one of a sensing measurement quantity, a positioning measurement quantity, and a common measurement quantity, and the common measurement quantity is used for positioning measurement and sensing measurement; and
sending the measurement quantity to at least one of the second communication device and a fourth communication device, wherein the fourth communication device comprises at least one of a second base station and a second terminal associated with the positioning requirement.

8. The method according to claim 7, wherein the measurement quantity is determined by at least one of the first communication device and the third communication device.

9. The method according to claim 7, further comprising:
obtaining a measurement result corresponding to the measurement quantity, wherein the measurement result is obtained according to signal configuration information and the measurement quantity, the signal configuration information comprises at least one of configuration information for a sensing signal and configuration information for a positioning signal, and the signal configuration information is determined according to at least one of the sensing requirement and the positioning requirement.

10. The method according to claim 9, wherein after the obtaining a measurement result corresponding to the measurement quantity, the method further comprises:
determining a sensing result according to a measurement result corresponding to a first target measurement quantity and a positioning result sent by the third communication device, wherein the first target measurement quantity comprises at least one of the sensing measurement quantity and the common measurement quantity, the positioning result is sent by the third communication device according to the positioning requirement, and the positioning result comprises terminal location information.

11. The method according to claim 10, wherein before the determining a sensing result according to a measurement result corresponding to a first target measurement quantity and a positioning result sent by the third communication device, the method further comprises:
sending a target measurement result corresponding to a second target measurement quantity to the third communication device, wherein the second target measurement quantity comprises at least one of the positioning measurement quantity and the common measurement quantity; and
obtaining the positioning result determined by the third communication device according to the target measurement result.

12. The method according to claim 10, wherein the terminal location information comprises first indication information, and the first indication information indicates a correspondence between the positioning result and the first target measurement quantity.

13. The method according to claim 10, wherein the positioning result comprises a known positioning result.

14. The method according to claim 1, wherein a type of the positioning requirement comprises at least one of the following:
a first positioning requirement type, wherein the first positioning type is used for requesting to obtain a known positioning result;
a second positioning requirement type, wherein the second positioning request type is used for requesting to obtain a current positioning result; and
a third positioning requirement type, wherein the third positioning request type is used for requesting to obtain a positioning result at preset time in the future.

15. The method according to claim 14, wherein the positioning requirement further comprises second indication information, and the second indication information indicates time corresponding to the positioning result requested by the positioning requirement.

16. A sensing positioning method, comprising:
obtaining, by a third communication device, a positioning requirement, wherein the positioning requirement is sent by a first communication device in a case that a sensing requirement received by the first communication device is a sensing requirement associated with a positioning service;
obtaining first information according to the positioning requirement, wherein the first information comprises at least one of signal configuration information and a measurement quantity, the signal configuration information is signal configuration information used for sensing measurement and/or positioning measurement, and the measurement quantity is a measurement quantity used for sensing measurement and/or positioning measurement; and
sending the first information to at least one of a second communication device and a fourth communication device, wherein the second communication device comprises a terminal and/or a base station associated with the sensing requirement, and the fourth communication device comprises a terminal and/or a base station associated with the positioning requirement.

17. The method according to claim 16, wherein after the obtaining, by a third communication device, a positioning requirement, the method further comprises:
determining a fourth communication device associated with the positioning requirement.

18. The method according to claim 16, wherein the signal configuration information comprises at least one of configuration information for a sensing signal and configuration information for a positioning signal.

19. The method according to claim 18, wherein in a case that the signal configuration information comprises the configuration information for the sensing signal and the configuration information for the positioning signal, the signal configuration information further comprises first identification information, wherein
the first identification information indicates that the signal configuration information is used for positioning measurement and sensing measurement.

20. The method according to claim 19, wherein the signal configuration information is determined by at least one of the first communication device and the third communication device.

21. The method according to claim 16, wherein the measurement quantity comprises at least one of a sensing measurement quantity, a positioning measurement quantity, and a common measurement quantity, and the common measurement quantity is used for positioning measurement and sensing measurement.

22. The method according to claim 21, wherein the measurement quantity is determined by at least one of the first communication device and the third communication device.

23. The method according to claim 16, further comprising:
determining a positioning result according to the positioning requirement, wherein the positioning result comprises terminal location information; and
sending the positioning result to the first communication device.

24. The method according to claim 23, wherein the determining a positioning result according to the positioning requirement comprises:
obtaining a target measurement result corresponding to a second target measurement quantity sent by a target communication device, wherein the second target measurement quantity comprises at least one of a positioning measurement quantity and a common measurement quantity, and the target communication device comprises the first communication device or the fourth communication device; and
determining the positioning result according to the target measurement result.

25. The method according to claim 23, wherein the terminal location information comprises first indication information, the first indication information indicates a correspondence between the terminal location information and a second target measurement quantity, and the second target measurement quantity comprises at least one of a sensing measurement quantity and a common measurement quantity.

26. The method according to claim 23, wherein a type of the positioning requirement comprises at least one of the following:
a first positioning requirement type, wherein the first positioning type is used for requesting to obtain a known positioning result;
a second positioning requirement type, wherein the second positioning request type is used for requesting to obtain a current positioning result; and
a third positioning requirement type, wherein the third positioning request type is used for requesting to obtain a positioning result at preset time in the future.

27. The method according to claim 26, wherein the determining a positioning result according to the positioning requirement comprises:
determining the positioning result corresponding to the positioning requirement according to the known positioning result in a case that the type of the positioning requirement is the first positioning requirement type.

28. A sensing positioning apparatus, comprising:
a first receiving module, configured to receive a sensing requirement; and
a first sending module, configured to send, in a case that the sensing requirement is a sensing requirement associated with a positioning service, the sensing requirement to a second communication device, and send a positioning requirement to a third communication device.

29. A sensing positioning apparatus, comprising:
a first obtaining module, configured to obtain a positioning requirement, wherein the positioning requirement is sent by a first communication device in a case that a sensing requirement received by the first communication device is a sensing requirement associated with a positioning service;
a second obtaining module, configured to obtain first information according to the positioning requirement, wherein the first information comprises at least one of signal configuration information and a measurement quantity, the signal configuration information is signal configuration information used for sensing measurement and/or positioning measurement, and the measurement quantity is a measurement quantity used for sensing measurement and/or positioning measurement; and
a second sending module, configured to send the first information to at least one of a second communication device and a fourth communication device, wherein the second communication device comprises a terminal and/or a base station associated with the sensing requirement, and the fourth communication device comprises a terminal and/or a base station associated with the positioning requirement.

30. A communication device, comprising a processor, a memory, and a program or instructions stored in the memory and executable on the processor, wherein the program or the instructions, when executed by the processor, implement the steps of the sensing positioning method according to any one of claims 1 to 15, or implement the steps of the sensing positioning method according to any one of claims 16 to 27.

31. A readable storage medium, storing a program or instructions, wherein the program or the instructions, when executed by a processor, implement the steps of the sensing positioning method according to any one of claims 1 to 15, or implement the steps of the sensing positioning method according to any one of claims 16 to 27.

32. A chip, comprising a processor and a communication interface, wherein the communication interface is coupled to the processor, and the processor is configured to run a program or instructions to implement the steps of the sensing positioning method according to any one of claims 1 to 15, or implement the steps of the sensing positioning method according to any one of claims 16 to 27.

33. A computer program product, stored in a non-transitory readable storage medium, wherein the computer program product is executed by at least one processor to implement the steps of the sensing positioning method according to any one of claims 1 to 15, or implement the steps of the sensing positioning method according to any one of claims 16 to 27.

34. A communication device, configured to implement the steps of the sensing positioning method according to any one of claims 1 to 15, or implement the steps of the sensing positioning method according to any one of claims 16 to 27.
